# EUROPEAN PATENT APPLICATION

(11) **EP 2 566 111 A1**
(43) Date of publication of application: **06.03.2013**
(21) Application number: 11179341.0
(22) Date of filing: 30.08.2011
(51) Int. Cl.: H04L 12/437

(54) **Utility communication method and system**

(71) Applicant: ABB Technology AG, 8050 Zürich (CH)
(72) Inventor: Cachin, Dominique, 8400 Winterthur (CH); Kranich, Mathias, 79774 Albbruck (DE); Leeb, Christian, 8006 Zürich (CH)
(74) Representative: ABB Patent Attorneys

(57) **Abstract**

The present invention is concerned with a packet-switched wide-area communication network including a plurality of nodes (1 to 11) interconnected in a multi-ring topology with two peer rings (A, B) individually operating according to a High-availability Seamless Redundancy (HSR) protocol and coupled via two Ring-Ring Coupling (RRC) nodes (6, 7). Two Wavelength Division Multiplexers (WDM) (60, 70) are interconnected via a single optical cable (65), and adapted to multiplex a first (ring-A) optical signal received from a first port and a second (ring-B) optical signal received from a second port of a respective RRC for transmission over the single optical cable. As compared to standard HSR, the invention results in high availability of the wide-area communication network without incurring the cost of a second optical cable between the RRC nodes.

## Description

### FIELD OF THE INVENTION

The invention relates to the field of utility communication, in particular to wide-area communication over communication networks with a multi-ring topology and high availability.

### BACKGROUND OF THE INVENTION

Utilities provide for water, gas or electrical energy on a continuous basis and via suitable transmission and distribution systems. The latter include sites, such as sources and substations, which have to be coordinated in one way or the other across distances of hundreds of kilometers. Within their utility communication systems, a variety of messages are exchanged over long-distance communication links between distant sites of the utility in order to safely transmit and distribute water, gas or electrical energy.

For securely transmitting messages over long distances from one site to the other, the utility may revert to a Wide-Area communication Network (WAN). In the present context, a WAN can be a dedicated point-to-point communication link between two sites based on e.g. optical fiber or pilot wires, a connection-oriented communication network with a guaranteed data rate such as Ethernet over SDH / HDLC, or a packet-oriented communication network interconnecting a number of sites of the utility, and comprising a plurality of specific network elements such as switches, repeaters and possibly optical transmission media at the physical layer.

Electric power utilities often rely on connection-oriented or circuit-switched SDH (Synchronous Digital Hierarchy) or SONET networks for communication of mission critical operation data like teleprotection signaling or SCADA control and supervision data. This technology features proven quality of service and path resilience of less than 50 ms in case of a failure of an optical link. Further, it is possible to predefine the data path that a particular communication service shall follow inside the network, which is referred to as 'traffic-engineering' in the following.

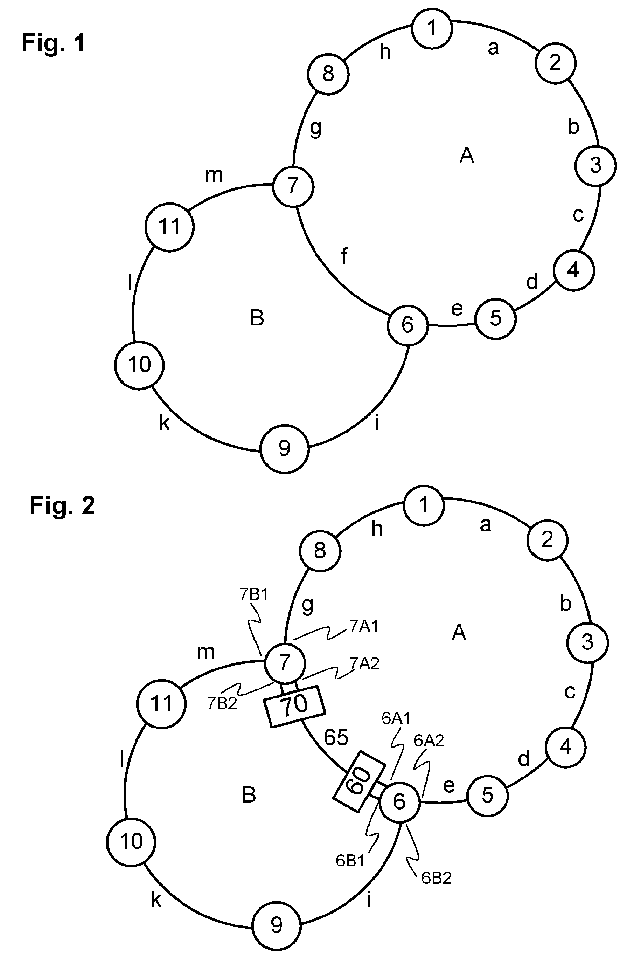

Fig.1 depicts an exemplary communication network with a multi-ring topology or structure as often found in utility networks, in which nodes 1 to 11 and links a to m form two peer rings A, B. Ring nodes 1 to 5 and 8 to 11 are connected to exactly two neighboring nodes of the network as well as to client or end devices (not depicted) running utility applications that communicate over the network. Coupling nodes 6, 7 are connected to three neighboring nodes and delimit the link f as a shared link that is part of both peer rings. Multi-ring topologies with a serial arrangement of more than two peer rings are also conceivable, wherein every three-neighbor node qualifies as a coupling node in terms of multi-ring topology.

The basic multi-ring structure of Fig.1 typically develops out of a single ring A, to which an extension is added in the form of a sub-ring 9-11 that together with the redundant nodes 6, 7 closes into a peer ring B. In case of SDH, optical fibers of original ring A do not need to be duplicated to form the shared link f, nor is any other provision required apart from traffic separation using standard SDH traffic engineering mechanism. While the normal traffic path for data between node 6 and 9 is through the link i, circuit-switched SDH systems are capable to switchover this traffic to e.g. link k-1-m-f within 50 ms in case of a fiber link failure in link i. An important prerequisite in order to enable this path switch-over is the traffic engineering, which allows the user to predefine the working path of the communication service, i.e. link i, and equally to predefine the protecting path for these services, i.e. links k-l-m-f.

Alternatively to the above-mentioned connection-oriented communication network, the Wide Area communication Network (WAN) may be a packet-switched communication network, such as an Ethernet (Layer-2 of the OSI communication stack) network or an IP (Layer-3) network with a number of interconnected switches or routers as the nodes. In the context of the present invention, the difference between a Local Area Network (LAN) and a WAN is considered to reside in the geographical extension rather than in the network topology, with WAN inter-node distance in excess of 10 km as opposed to LANs restricted to individual premises or utility substations.

Generally, in a ring network, ring nodes have two communication ports connecting to two neighbour nodes and being able to forward frames from one port to the other according to bridging rules. Ring nodes are provided for connecting client or end devices without inherent ring functionality and/or for coupling devices that are part of a peer network rather than of the communication ring. On the other hand, a switching element can also be integrated within the client or end device where the utility application runs, thus forming a switching end node with inherent ring functionality. With full-duplex links, the ring network can be operated in either or both directions and thus offers resiliency against link failure. Ring protocols such as RSTP (IEEE 802.1D) implemented with Ethernet ensure that frames cannot circulate indefinitely in the ring. A ring topology provides a cost-effective redundancy, since only one additional inter-node link is needed to protect against any single link failure.

According to WO 2010010120 and as specified in the standard IEC 62439-3 Clause 5 entitled "High-availability Seamless Redundancy (HSR)", in a ring type communication network with a plurality of ring nodes and operating with full duplex links, a source node injects pairs of redundant ring frames. For each source frame injected into the ring network, a first and a second ring frame are transmitted in opposite directions, both frames being relayed by the other nodes of the ring network until they eventually return back to the source node. As a consequence, network traffic is roughly doubled with respect to a conventional ring network. A destination node thus receives, in the fault-free state, two redundant frames with the same contents. It forwards only the earlier or first frame of the two frames to its upper layer protocols and discards the later or second frame.

Ultimately, two peer HSR rings can be connected by two Ring-Ring Coupling (RRC) units (or "Quad-Boxes") located e.g. at nodes 6 and 7 in Fig.1 and acting identically, thus avoiding a single point of failure. An RRC unit is equivalent to a pair of ring coupling devices as described above and arranged "back-to-back". In such a standard configuration, the physical media of the link f between the two RRC units is doubled, i.e. an additional cable is provided between the two nodes 6 and 7. This additional cable enables, together with the readily available four-port RRC units, both HSR peer rings to operate with their own exclusive data path between any two adjacent nodes. However, duplication of network elements may be somewhat uneconomical. In particular, where the utility already owns and operates a communication network with non-redundant links, subsequent duplication even of single optical fiber links is not appealing.

### DESCRIPTION OF THE INVENTION

It is therefore an objective of the invention to provide for seamless redundancy in wide-area utility communication networks with a multi-ring structure without a full duplication of the physical medium between two Ring-Ring Coupling nodes. This objective is achieved by a packet-switched wide-area communication network according to the independent claim. Preferred embodiments are evident from the dependent patent claims, wherein the claim dependency shall not be construed as excluding further meaningful claim combinations.

According to the invention, in a packet-switched wide-area communication network including a plurality of nodes interconnected in a multi-ring topology with two peer rings individually operating according to a High-availability Seamless Redundancy (HSR) protocol and coupled via two Ring-Ring Coupling (RRC) nodes, two Wavelength Division Multiplexers (WDM) are interconnected via a single optical cable, and adapted to multiplex a first (ring-A) optical signal received from a first port and a second (ring-B) optical signal received from a second port of a respective RRC for transmission over the single optical cable.

As compared to standard HSR, the invention results in high availability of the wide-area communication network without incurring the cost of a second optical cable between the RRC nodes. Viewed from a different perspective and compared to conventional SDH, the seamless switchover according to HSR reduces path resilience time in case of a failure of an optical link to less than 1 ms.

### BRIEF DESCRIPTION OF THE DRAWINGS

The subject matter of the invention will be explained in more detail in the following text with reference to preferred exemplary embodiments which are illustrated in the attached drawings, in which:
Fig.1 depicts a generic multi-ring communication network, and
Fig.2 depicts a multi-ring communication network with two Wavelength-Division Multiplexers in-between two Ring-Ring Coupling nodes.

### DETAILED DESCRIPTION OF PREFERRED EMBODIMENTS

Fig.2 depicts a packet-switched Ethernet network with the same multi-ring structure as in Fig. 1, and with Ethernet traffic to be transmitted from any of the nodes 1-11 operating according to the High-availability Seamless Redundancy (HSR) protocol to a receiver node. The multi-ring structure can be viewed as two HSR rings A, B with two redundant Ring-Ring Coupling (RRC) nodes 6, 7 and a shared link f between the two RRC nodes. In the context of the present invention, at least the shared link f comprises optical fibre as the physical media, with all the lines depicted in Fig.1 including a non-redundant optical cable with two distinct strands of optical fibre, i.e. a fibre pair, for bi-directional communication.

Both RRC nodes 6, 7 have two communication ports for ring A (6A1, 6A2; 7A1, 7A2) and two communication ports for ring B (6B1, 6B2; 7B1, 7B2). Two ports 6A1, 6B1; 7A2, 7B2 of each RRC node are connected to a respective one of two interconnected Wavelength-Division Multiplexers (WDM) 60, 70.

The invention proposes a solution for the coupling of the two HSR rings A, B without the need for two optical cables extending all the way between RRC nodes 6 and 7. A single optical cable 65 is provided between the WDM 60, 70, and the traffic of the two HSR rings is separated by using two different wavelengths which can be transported in a same direction over a same optical fiber. Generally speaking, a WDM multiplexes, or joins, a number of optical carrier signals onto a single optical fiber by using different wavelengths (colours) of laser light. A de-multiplexer generally integrated in the WDM at the receiver end extracts the original optical signals from the signal received over the single optical fiber.

In one embodiment, the two RRC nodes 6, 7 are adapted to send and receive HSR traffic along the shared link using two distinct wavelengths, i.e. wavelength λA for the traffic of ring A via ports 6A1, 7A2 and wavelength λB for the traffic of ring B via ports 6B1, 7B2. The two optical signals from each node with different wavelengths λA, λB can then be coupled to one single optical fiber using a commercially available, passive WDM such as SPEED-DWDM 81C from Pan Dacom Direkt. In a different and less preferred embodiment, the two RRC nodes 6, 7 are adapted to send and receive HSR traffic along the shared link using the same wavelength of e.g. 1550 nm, such that a wavelength converter, or transponder, is needed as the WDM. A transponder can be made up of two transceivers placed after each other, the first transceiver converting an incoming optical signal to an electrical signal, and the second transceiver converting the electrical signal to an optical signal at a required target wavelength.

In agreement with the objective of the invention, the WDMs 60, 70 are placed close to the RRC nodes 6, 7, wherein a cable length of a few 10 cm between WDM and RRC node mounted in a same rack is certainly acceptable. Instead of using a commercially available off-the shelf WDM, the wavelength division functionality may be integrated in the RRC, in which case a single communication port for the link to the peer RRC node is sufficient. In case the two rings are not coupled via neighboring nodes, further (de-)multiplexers may be needed to properly connect an intermediary node arranged on at least one peer ring in-between the RRCs.

## Claims

1. A packet-switched wide-area communication network including a plurality of nodes (1
- 11) interconnected in a multi-ring topology with two peer rings (A, B) individually operating according to a High-availability Seamless Redundancy HSR protocol and coupled via two Ring-Ring Coupling RRC nodes (6, 7), comprising
- two Wavelength Division Multiplexers WDM (60, 70) interconnected via a single optical cable (65), and adapted to multiplex a first optical signal received from a first port (6A1; 7A2) and a second optical signal received from a second port (6B1; 7B2) of a respective RRC (6, 7) for transmission over the single optical cable.

2. The packet-switched wide-area communication network according to claim 1, wherein
- the RRCs are adapted to transmit the first optical signal at a first wavelength λA and the second optical signal at a second wavelength λB, and wherein
- the two WDMs are passive multiplexers.

3. The packet-switched wide-area communication network according to one of claims 1 to 2, wherein the wide-area communication network includes nodes (1 - 11) located at distinct substations of a utility or at distinct sites of an international organization.
